# EUROPÄISCHE PATENTSCHRIFT

(11) **EP 0 587 834 B1**
(45) Veröffentlichungstag und Bekanntmachung des Hinweises auf die Patenterteilung: **18.09.1996**
(21) Anmeldenummer: 93905145.4
(22) Anmeldetag: 25.03.1993
(51) Int. Cl.: G01F 23/72, G10K 11/22, G10K 11/02, G01B 17/00

(54) **VORRICHTUNG ZUR MESSUNG EINER DISTANZ MITTELS ULTRASCHALL**
ULTRASONIC DISTANCE MEASURING DEVICE
DISPOSITIF POUR MESURER UNE DISTANCE AVEC DES ULTRASONS

(30) Priorität: 31.03.1992 CH 1036/92
(43) Veröffentlichungstag der Anmeldung: 23.03.1994
(73) Patentinhaber: HEINRICH KÜBLER AG, CH-6340 Baar (CH)
(72) Erfinder: BAUMANN, Erwin, CH-8050 Zürich (CH)
(86) Internationale Anmeldenummer: CH9300084
(87) Internationale Veröffentlichungsnummer: WO9320412

(56) Entgegenhaltungen:
- EP-A- 0 024 589
- EP-A- 0 278 678
- DE-A- 3 428 132
- US-A- 1 599 914

## Beschreibung

Die Erfindung betrifft eine Vorrichtung zur Messung einer Distanz mittels eines Ultraschallwandlers gemäss Patentanspruch 1.

Nach der EP-A-24589 ist ein Längen- und Temperaturmessgerät, insbesondere für Tankanlagen oder dergleichen, bekannt, welches eine Nachführeinrichtung mit einem Schwimmer ausserhalb eines Messrohres aufweist, womit ein zylinderförmiger Reflektor mit einem Durchgangsloch im Messrohr ständig auf der Höhe des Füllgutes gehalten wird. An den beiden Enden des Messrohres ist je ein Ultraschall-Sender/Empfänger angebracht. Die Schallwellen werden entweder am Reflektor reflektiert oder sie durchlaufen die gesamte Länge des Messrohres, wodurch aus den ermittelten Laufzeiten auf den Füllstand und die Temperatur des Füllgutes geschlossen wird. Nachteilig dabei ist, dass zwei Ultraschall-Sender/Empfänger benötigt werden, was sich kostenmässig ungünstig auswirkt.

In der DE-A-3428132 wird ein Verfahren zur Messung von Flüssigkeitshöhen in Behältern mittels eines Ultraschallwandlers beschrieben, welches aus einem Messrohr, einem geführten Schwimmer und einem Reflektor besteht, wobei ein einziger Ultraschallwandler in einer Randzone des Messrohres angeordnet ist und dieser das Sendesignal wie auch das Empfangssignal verarbeitet.

Im weiteren ist nach PS-DE 3519254 ein Ultraschall-Entfernungsmesser bekannt, der über einen Ultraschall-Sender und einen Ultraschall-Empfänger in separater Anordnung verfügt, wobei sowohl Sender wie auch Empfänger mit deren vertieft angeordneten ultraschallempfindlichen Flächen und einer speziell gewählten Horn-Geometrie verhindern, dass eine Koppelung zwischen Sender und Empfänger stattfindet und dadurch das Signal/Störsignal-Verhältnis unerwünscht beeinflussen. Zudem ist das beschriebene Verfahren nur zur Messung kleiner Distanzen geeignet.

Es ist die Aufgabe der vorliegenden Erfindung, eine Vorrichtung zur Distanzmessung in einem Rohr anzugeben, welche mittels eines Ultraschallwandlers mit hoher Genauigkeit und hoher Auflösung erfolgt und für die Füllstandsmessung besonders geeignet ist.

Erfindungsgemäss wird diese Aufgabe mittels einer Vorrichtung gemäss dem Wortlaut nach Anspruch 1 gelöst. In den Ansprüchen 2 - 8 werden Ausführungsformen dazu beschrieben. Die Erfindung wird im Folgenden anhand der Zeichnungen näher erläutert. Es zeigen:
- Fig. 1: Prinzip der Messanordnung in schematischer Darstellung
- Fig. 2: Ausführungsbeispiel eines Wandlergehäuses im Schnitt
- Fig. 3A: Erstes Ausführungsbeispiel eines Zwischenrohrstückes im Schnitt
- Fig. 3B: Zweites Ausführungsbeispiel eines Zwischenrohrstückes im Schnitt
- Fig. 3C: Drittes Ausführungsbeispiel eines Zwischenrohrstückes im Schnitt

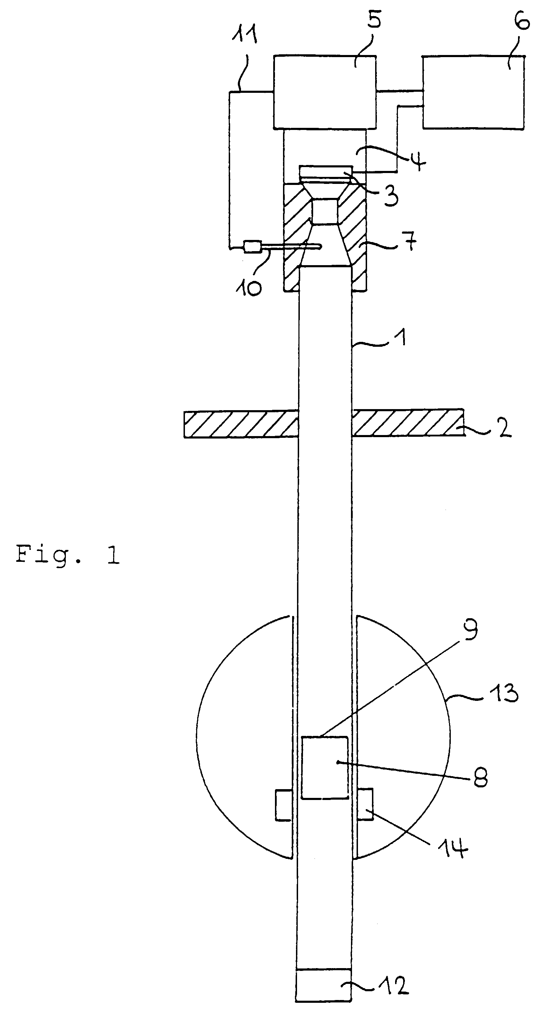

Fig. 1 zeigt das Prinzip der Messanordnung in schematischer Darstellung. Ein Messrohr 1 wird mittels eines Flansches 2 in einem Behälter, vorzugweise in einer Tankanlage, vertikal eingebaut. Am oberen Ende des Messrohrs befindet sich ein Ultraschall-Sende/Empfänger, bestehend aus einem Ultraschallwandler 3, einem Wandlergehäuse 4, einer Temperaturerfassungseinheit 5 und einer Treibereinheit 6. Die Treibereinheit 6 enthält die zur Anregung des Ultraschallwandlers 3 notwendigen Mittel, sowie jene zur Verarbeitung der Sende- und Empfangssignale derselben und Mittel zum Betreiben der Temperaturerfassungseinheit 5 sowie der Verarbeitung deren Temperatursignale. Auf die Treibereinheit 6 und die Temperaturerfassungseinheit 5 wird im weiteren nicht näher eingegangen. Die vom Ultraschallwandler 3 erzeugte und abgegebene Schallwelle wird über ein Zwischenrohrstück 7 in das Messrohr 1 eingekoppelt und an der Reflektorfläche 9 des Reflektors 8 reflektiert, wodurch ein Teil der Schallwelle wieder auf den Ultraschallwandler 3 fällt, welcher nun als Empfänger arbeitet. Die hin- und rücklaufende Schallwelle wird mittels einer Laufzeitmessung erfasst und in bekannter Weise zur Ermittlung einer Distanz ausgewertet. Im Zwischenrohrstück 7 ist mindestens ein Temperaturfühler 10 angeordnet, welcher über die Zuleitungen 11 mit der Temperaturerfassungseinheit 5 verbunden ist. Der Temperaturfühler 10 kann auch an einer anderen Stelle der Vorrichtung angeordnet werden, beispielsweise im Bereich des Messrohres 1, in welchem auch mehrere Temperaturfühler angeordnet werden können, womit sich eine bessere Temperaturübersicht ergibt. Das Messrohr 1 wird an dessen unterem Ende vorteilhafterweise mit einem Abschlussstück 12 dicht abgeschlossen, damit kein Füllgut in das Messrohrinnere gelangen kann. Der Reflektor 8 wird mittels eines Schwimmers 13, welcher mit einem Ringmagneten 14 versehen ist, derart nachgeführt, dass die Reflektorfläche 9 dem jeweiligen Füllstand des Füllgutes im Behälter entspricht. Der Reflektor 8 besteht im wesentlichen aus Kunststoff, wobei insbesondere dessen Reflektorfläche 9 vorteilhafterweise aus einem schallharten planen Kunststoff gefertigt wird. Das Messrohr 1 besteht aus Kunststoff oder Metall, beispielsweise aus Polyvinylchlorid (PVC) oder aus Stahl. Vorzugweise wird es aus Edelstahl gefertigt, womit eine weitgehende Korrosionsfestigkeit gewährleistet ist.

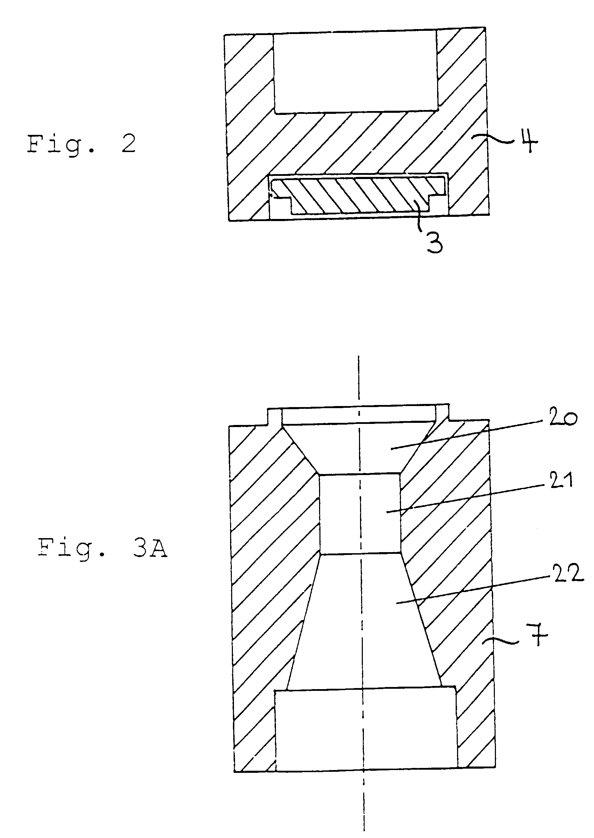

Fig. 2 zeigt ein Ausführungsbeispiel des Wandlergehäuses 4 im Schnitt dargestellt. Als Ultraschallwandler 3 wurde ein 'Environmental Ultrasonic Transducer' (Polaroid) verwendet, welcher Aussenmasse von 10 mm x 38,5 mm aufwies. Dieser wurde in das Wandlergehäuse 4 eingelegt und eingeklemmt durch Verschrauben des Wandlergehäuses 4 mit dem Zwischenrohrstück 7.

Fig. 3A zeigt ein erstes Ausführungsbeispiel des Zwischenrohrstückes 7 im Schnitt dargestellt. Es ist aus einem Stück Aluminium gearbeitet und weist erfindungsgemäss die folgenden drei Zonen auf: Einen Eingangstrichter 20, einen Zylinderteil 21 und einen Ausgangstrichter 22. Die Auslegung dieser drei Zonen ist für eine optimale Schallausbreitung[-übertragung] wesentlich und muss in ihren Konstruktionsmassen aufeinander abgestimmt werden. Der messrohrseitige Durchmesser des Ausgangstrichters 22 ist auf den Innendurchmesser des Messrohrs abgestimmt, damit sich keine Stossstellen ergeben. Das Zwischenrohrstück 7 ist mit dem Messrohr 1 verschraubt.
Im weitern wird das Zwischenrohrstück 7 detailliert beschrieben: Der Eingangstrichter 20 hat sensorseitig einen Durchmesser von 38,5 mm und verjüngt sich auf 20 mm, wobei sich einer Konuslänge von ca. 13 mm ein Konuswinkel von ca. 36 Grad zur Messrohrachse ergibt.
Der Zylinderteil 21 hat einen Durchmesser von 20 mm und eine Länge von 20 mm.
Der Ausgangstrichter 22 hat sensorseitig einen Durchmesser von 20 mm und weitet sich auf 38,5 mm messrohrseitig auf, wobei sich einer Konuslänge von 33 mm ein Konuswinkel von ca. 16 Grad zur Messrohrachse ergibt.

Fig. 3B zeigt ein zweites Ausführungsbeispiel des Zwischenrohrstückes 7 im Schnitt dargestellt.
Der Eingangstrichter 20 hat sensorseitig einen Durchmesser von 38,5 mm und verjüngt sich auf 28 mm, wobei sich einer Konuslänge von ca. 4,7 mm ein Konuswinkel von ca. 48 Grad zur Messrohrachse ergibt.
Der Zylinderteil 21 hat einen Durchmesser von 28 mm und eine Länge von 18,3 mm.
Der Ausgangstrichter 22 hat sensorseitig einen Durchmesser von 28 mm und weitet sich auf 38,5 mm messrohrseitig auf, wobei sich einer Konuslänge von 43 mm ein Konuswinkel von ca. 7 Grad zur Messrohrachse ergibt.

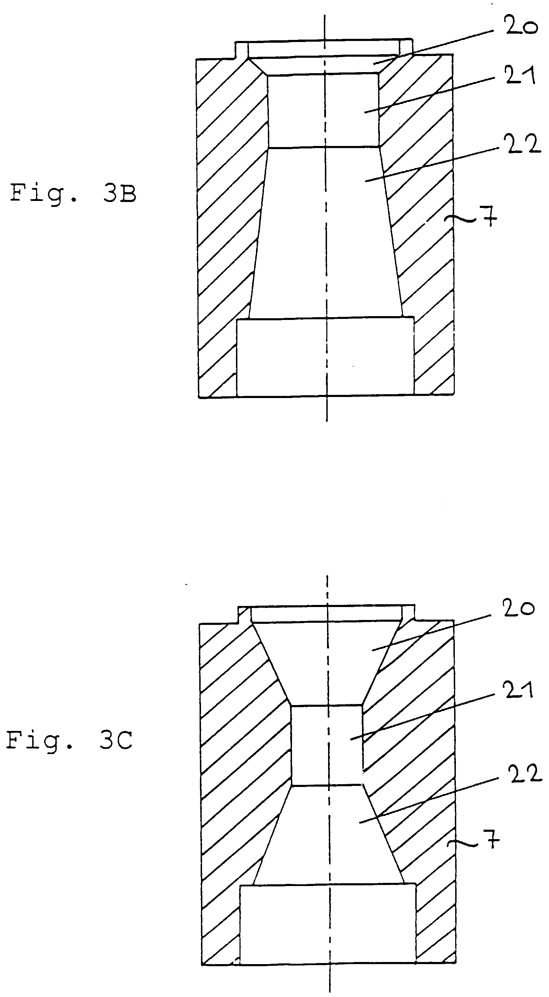

Fig. 3C zeigt ein drittes Ausführungsbeispiel des Zwischenrohrstückes 7 im Schnitt dargestellt.
Der Eingangstrichter 20 hat sensorseitig einen Durchmesser von 38,5 mm und verjüngt sich auf 18 mm, wobei sich einer Konuslänge von ca. 21 mm ein Konuswinkel von ca. 26 Grad zur Messrohrachse ergibt.

Der Zylinderteil 21 hat einen Durchmesser von 18 mm und eine Länge von 20 mm.
Der Ausgangstrichter 22 hat sensorseitig einen Durchmesser von 18 mm und weitet sich auf 38,5 mm messrohrseitig auf, wobei sich einer Konuslänge von 25 mm ein Konuswinkel von ca. 22 Grad zur Messrohrachse ergibt.

Mit einem Zwischenrohrstück nach Fig. 3A wurden beispielsweise die nachstehend angeführten Resultate erzielt:

| Distanz | | Genauigkeit | Auflösung |
|---|---|---|---|
| Soll [m] | Ist [m] | ΔG [mm] | ΔS [mm] |
| 0,500 | 0,500 | 0 | ≤ 1 |
| 0,505 | 0,505 | 0 | ≤ 1 |
| 1,000 | 1,001 | 1 | ≤ 1 |
| 1,005 | 1,006 | 1 | ≤ 1 |
| 2,000 | 2,002 | 2 | ≤ 1 |
| 2,005 | 2,007 | 2 | ≤ 1 |
| 3,000 | 3,002 | 2 | ≤ 1 |
| 3,005 | 3,006 | 1 | ≤ 1 |
| 4,000 | 4,001 | 1 | ≤ 1 |
| 4,005 | 4,006 | 1 | ≤ 1 |
| 5,000 | 5,001 | 1 | ≤ 1 |
| 5,005 | 5,006 | 1 | ≤ 1 |
| 6,000 | 6,004 | 4 | ≤ 1 |
| 6,005 | 6,008 | 3 | ≤ 1 |

Die angegebene Auflösung ΔS bezieht sich auf den gemessenen Distanz-Istwert.

Durch die erfindungsgemässe Auszeichnung des Zwischenrohrstückes 7 wird eine optimale Ankopplung des Ultraschallwandlers 3 an das Messrohr 1 ermöglicht, wodurch in der Folge auf eine aufwendige und komplizierte Aufarbeitung der Echosignale, insbesondere auf die Elimination von Störsignalen, im wesentlichen verzichtet werden kann.

Erfindungswesentlich ist, dass die erfindungsgemässe Lösung der Aufgabe sich auszeichnet durch eine hohe Genauigkeit und hohe Auflösung über einen grossen Distanzbereich, durch einen geringen Leistungsbedarf in der Treibereinheit, und durch einen geringen Schaltungsaufwand, da eine aufwendige Aufbereitung von Echosignalen entfällt.

## Patentansprüche

1. Vorrichtung zur Messung einer Distanz mittels eines Ultraschallwandlers, bestehend mindestens aus einem Messrohr, einem geführten Schwimmer und einem Reflektor, dadurch gekennzeichnet, dass ein einziger Ultraschallwandler (3) in einer Randzone des Messrohres (1) angeordnet ist, dass dieser das Sendesignal wie auch das Empfangssignal verarbeitet, dass zwischen dem Ultraschallwandler (3) und dem Messrohr (1) ein Zwischenrohrstück (7) mit nicht konstantem Querschnitt angeordnet ist, bei welchem sich ein Eingangstrichter (20) verjüngt und in einen Zylinderteil (21) übergeht, an welches sich ein Ausgangstrichter (22) anschliesst, der sich in Richtung des Messrohres aufweitet, dass das Zwischenrohrstück (7) eine Länge von ungefähr dem doppelten Durchmesser des Ultraschallwandlers (3) aufweist, wobei der Eingangstrichter (20) einen Winkel zwischen 20° und 50°, insbesondere 36°, und der Ausgangstrichter (22) einen Winkel zwischen 5° und 25°, insbesondere 16°, zur Messrohrachse aufweist.

2. Vorrichtung nach Anspruch 1, dadurch gekennzeichnet, dass der Innendurchmesser des Messrohres (1) ungefähr dem Durchmesser des Ultraschallwandlers (3) entspricht.

3. Vorrichtung nach Anspruch 2, dadurch gekennzeichnet, dass das Messrohr (1) über seine ganze Länge aus einem einzigen Stück und aus Edelstahl besteht.

4. Vorrichtung nach Anspruch 1, dadurch gekennzeichnet, dass der Reflektor (8) ein zylindrischer Körper mit einer planen Reflektorfläche (9) ist, der im Messrohr (1) verschiebbar angeordnet ist.

5. Vorrichtung nach Anspruch 1, dadurch gekennzeichnet, dass mindestens ein Temperaturfühler (10) im Bereich des Messrohres (1), insbesondere im Zwischenrohrstück (7) angeordnet ist.

## Claims

1. Device for the purpose of measuring a distance by means of an ultrasonic converter consisting at least of one measurement tube, a guided float and a reflector, wherein a single ultrasonic converter (3) is arranged in an edge zone of the measurement tube (1), wherein said ultrasonic converter processes both the transmitted signal and as the received signal, wherein an intermediate tube section (7) with non-constant cross section is arranged between the ultrasonic converter (3) and the measurement tube (1), an inlet funnel (20) of said tube section tapering and continuing in a cylindrical section (21) to which an outlet funnel (22) which flares in the direction of the measurement tube is connected, wherein the intermediate tube section (7) has a length of approximately twice the diameter of the ultrasonic converter (3), the inlet funnel (20) having an angle of between 20° and 50°, in particular 36°, and the outlet funnel (22) an angle of between 5° and 25°, in particular 16°, to the measurement tube axis.

2. Device as claimed in claim 1, wherein the inside diameter of the measurement tube (1) corresponds approximately to the diameter of the ultrasonic converter (3).

3. Device as claimed in claim 2, wherein the measurement tube (1) consists of a single piece over its entire length, as well as of stainless steel.

4. Device as claimed in claim 1, wherein the reflector (8) is a cylindrical body with a plane reflector surface (9) which is arranged movable in the measurement tube (1).

5. Device as claimed in claim 1, where at least one temperature sensor (10) is arranged in the area of the measurement tube (1), in particular in the intermediate tube section (7).

## Revendications

1. Dispositif pour mesurer une distance au moyen d'un convertisseur ultrason composé d'un tube de mesure, d'un flotteur guidé et d'un réflecteur caractérisé par le fait qu'un seul convertisseur ultrason (3) est disposé dans une zone marginale du tube de mesure (1), que ce dernier traite le signal d'émission de même que le signal de réception, qu'entre le convertisseur ultrason (3) et le tube de mesure (1) est placée une entretoise tubulaire (7) à section variable où un entonnoir d'entrée (20) se rétrécit et passe dans une pièce cylindrique (21) où se raccorde un entonnoir de sortie (21) qui s'élargit en direction du tube de mesure, que l'entretoise tubulaire (7) a une longueur d'environ le double du diamètre du convertisseur ultrason, l'entonnoir d'entrée (20) ayant un angle entre 20° et 50°, en particulier 36°, et l'entonnoir de sortie (22) un angle entre 5° et 25°, en particulier 16°, par rapport à l'axe du tube de mesure.

2. Dispositif selon la revendication 1 caractérisé par le fait que le diamètre intérieur du tube de mesure (1) correspond approximativement au diamètre du convertisseur ultrason (3).

3. Dispositif selon la revendication 2, caractérisé par le fait que le tube de mesure (1) se compose d'un seul morceau sur toute sa longueur et en acier spécial.

4. Dispositif selon la revendication 1, caractérisé par le fait que le réflecteur (8) est un corps cylindrique ayant une surface réflectrice plane (9) qui est disposée de manière à pouvoir se déplacer dans le tube de mesure (1).

5. Dispositif selon la revendication 1, caractérisé par le fait qu'au moins un capteur de température (10) est placé dans la zone du tube de mesure (1), en particulier dans l'entretoise tubulaire (7).
